# EUROPEAN PATENT APPLICATION

(11) **EP 0 845 897 A2**
(43) Date of publication of application: **03.06.1998**
(21) Application number: 97120636.2
(22) Date of filing: 25.11.1997
(51) Int. Cl.: H04N 1/32

(54) **Picture print ordering method and system, and recording medium**

(30) Priority: 27.11.1996 JP 316699/96; 01.04.1997 JP 82896/97
(71) Applicant: Fuji Photo Film Co., Ltd., Kanagawa-ken (JP)
(72) Inventor: Shiota, Kazuo, Minato-ku, Tokyo (JP); Ohtsuka, Shuichi, c/o Fuji Photo Film Co., Ltd.,, Kanagawa-ken (JP); Nakajima, Nobuyoshi, c/o Fuji Photo Film Co., Ltd, Kanagawa-ken (JP); Haneda, Norihisa, Asaka-shi, Saitama-ken (JP); Makishima, Sugio, Asaka-shi, Saitama-ken (JP); Tanaka, Hiroshi, Asaka-shi, Saitama-ken (JP); Takemura, Kazuhiko, c/o Fuji Photo Film Co., Ltd.,, Kanagawa-ken (JP)
(74) Representative: Klunker . Schmitt-Nilson . Hirsch

(57) **Abstract**

When a print of a picture image is ordered by generating print ordering information comprising electronic data in a predetermined standard to be processed by a predetermined photo finishing system, the print ordering information is generated by considering the content of the services that a service provider or a laboratory where the order is placed can provide so that the service will be provided with certainty. Picture image data obtained by reading a developed film are recorded in a recording medium together with printing service information regarding printing services. In print ordering information generation processing on the image data, the printing service information and the image data recorded in the recording medium are displayed on an order screen and print ordering information for requesting a printing service regarding the image data is generated by using the displayed printing service information.

## Description

### BACKGROUND OF THE INVENTION

### Field of the Invention

The present invention relates to a picture print ordering method and system which orders a print of a picture image by generating print ordering information in an electronic data standard to be processed by a photo finishing system, and also to a recording medium storing a program used for the method and system.

### Description of the Related Art

To order a print of picture image data from a service provider such as a DPE or a laboratory, a print ordering method which conveys the order by generating print ordering information in an electronic data format, instead of instructing the size or the number of the print at a counter of the service provider, has been proposed. According to this method, a photo finishing system installed in a DPE or the like can automatically generate an ordered print based on the print ordering information, by reading the print ordering information in the electronic data format, without input of the ordering information by an operator.

In this case, the print ordering information should be generated in accordance with a predetermined data format (the format that a photo finishing system can recognize). Therefore, application software by which customers can easily generate print ordering information on a display screen of a personal computer is provided to customers. This software displays a list and price of printing services on a display screen of a personal computer, lets a customer specify the number of prints or the like by referring to the displayed information, and generates print ordering information in the predetermined data format, based on the specified information.

According to the above application software, a customer can select an arbitrary service among the printing services displayed, and generate print ordering information to request the service.

However, in reality, the content of the printing services which can be provided varies depending on DPEs, or even on the time of year at the same DPE. For example, if the types of photo finishing system are different from one another, the services which can be provided thereby vary. Alternatively, even though the equipment is the same, the service charges may vary depending on competition between DPEs or the like. Furthermore, some services are time limited such as a new year greeting postcard generation service. Therefore, if uniform printing services can be requested by the above application software, it is possible that the order will not be accepted by a DPE regardless of the fact that the print ordering information itself can be generated.

### SUMMARY OF THE PRESENT INVENTION

Based on consideration of the problems described above, an object of the present invention is to provide a print ordering method and system which guarantees reception of a service by generating print ordering information considering the content of the services that a laboratory or a DPE at which the print order is placed can provide, when a customer generates the print ordering information using the above software.

The picture print ordering method of the present invention is a picture print ordering method which orders a picture image print by generating print ordering information comprising predetermined standard electronic data to be processed by a predetermined photo finishing system, wherein picture image data obtained by reading a developed film are recorded in a predetermined recording medium together with printing service information regarding the printing services which can be provided to the image data, and the printing service information as well as the picture image data recorded in the recording medium are displayed on an order screen when print ordering information for requesting printing service regarding the picture image data recorded in the recording medium is generated, and the print ordering information is generated by using the displayed printing service information.

The picture print ordering system of the present invention which carries out processing according to the above method is a picture print ordering system which orders a picture image print by generating print ordering information comprising electronic data in a predetermined data standard to be processed by a predetermined photo finishing system, comprising printing service information recording means which records picture image data obtained by reading a developed film and printing service information regarding services which can be provided to the picture image data in a predetermined recording medium, display means which displays the printing service information and the picture image data recorded in the recording medium on an order screen when print ordering information for requesting a printing service regarding the picture image data recorded in the recording medium is generated, input receiving means for receiving input of a variety of instruction information using the displayed printing service information, and print ordering information generating means for generating print ordering information based on the instruction information received by the input receiving means.

"Print ordering information comprising electronic data in a predetermined data standard to be processed by a predetermined photo finishing system" herein referred to means an order file in the IS (Image Shuttle) standard proposed by Fuji Photo Film Co. Ltd. or the like.

"The printing service information" means, for example, the content of the service (such as extra print generation, postcard generation, calendar generation), the sizes which can be available for a print (the regular size, L size, A4 calendar, A3 calendar or the like), the service charge for each service, the kinds of illustration and characters, which can be combined with a picture image, and the finish of the print (such as gloss).

On this occasion, the service charges and the kinds of illustration which can be combined with a picture image can be changed frequently. Therefore, information regarding the validity time for each service may be included in the printing service information. The name of the apparatus or the service provider which has recorded the printing service information in a recording medium may also be displayed as the printing service information on an order screen. Alternatively, a list of franchise shops which can provide the same service may be included in the printing service information. In other words, "the printing service which can be provided to the image data" means the services which can be provided directly by the service provider which recorded the printing service information or indirectly through the service provider serving as an agency.

"The predetermined recording medium" herein referred to means a medium for exchanging image data between a customer and a DPE or the like, such as an MO disc, a Zip disc, and a floppy disc. The image data exchanged via these recording media may be high resolution image data which can be printed as they are or low resolution image data which are only referred to for an order. However, if the recording medium is a floppy disc, it is preferable that only low resolution image data are recorded therein, due to its comparatively small capacity, and high resolution image data separately read from a film are used for printing. Since the recording in a recording medium is carried out for exchanging data with a customer, image data and printing service information may be stored temporarily in a built-in hard disc or the like and transferred via communication means. In other words, the "predetermined recording medium" is intended to include a hard disc used in such a case.

The print ordering information generated by a customer based on the printing service information is taken in and processed automatically by a photo finishing system together with the picture image data to be printed. The printing service information is shown by assigning a number such as 1 for gloss finish, 2 for monochrome finish and so on to each service in advance, and a customer can request a service by selecting the number thereof so that the photo finishing system which will carry out the printing processing can take in the print ordering information containing the number of the printing service and automatically carry out the processing which corresponds to the number in advance, such as gloss finish and monochrome finish. By assigning the numbers or the like in advance, the amount of data to be exchanged as the print ordering information can be made lower.

A customer can freely edit the image data recorded in the recording medium. In the case of high resolution image data, not only editing operations such as determining a layout, trimming, and combining the image data with an illustration, but also modification of the image can be carried out. In other words, the image data which are the target of the "print order" means both the image data read from a film and recorded in a recording medium and edited and processed image data on which editing and processing have been carried out.

"The order screen" means a screen that order processing software which operates on a personal computer displays on a monitor of the personal computer. The recording medium in which a program of the present invention is recorded is a recording medium which stores the application software within. This is the recording medium which stores a program by which print ordering information comprising electronic data in a predetermined standard to be processed by a predetermined photo finishing system is generated for a print order by a computer. The program comprises the steps of displaying, on a screen of a display apparatus connected to the computer, the printing service information as well as the picture image data stored in a predetermined medium, inputting instruction information by a variety of inputting devices using the displayed printing service information, and generating the print ordering information based on the instruction information input by the inputting device. "The display apparatus" or "a variety of input apparatuses" herein referred to means a monitor, keyboard, mouse, or the like of a personal computer.

According to the picture print ordering method and system of the present invention, when a service provider such as a DPE or a laboratory provides a recording medium to a customer, picture image data as well as printing service information showing the printing services that the service provider can provide are stored in the recording medium. Therefore, a customer can generate print ordering information for a print order while confirming the printing service information on an order screen. In this manner, it is possible to avoid the situation where an actual print order is not accepted regardless of the fact that the print ordering information itself can be generated.

According to the recording medium in which the program of the present invention is recorded, display of the order screen and generation of the print ordering information can be carried out by a personal computer of a customer by installing the program into the personal computer.

### BRIEF DESCRIPTION OF THE DRAWINGS

Figure 1 is a diagram showing an outline of the picture printing system of the present invention, and
Figure 2 is a diagram explaining print ordering information generation processing by the picture printing system of the present invention.

### DESCRIPTION OF THE PREFERRED EMBODIMENT

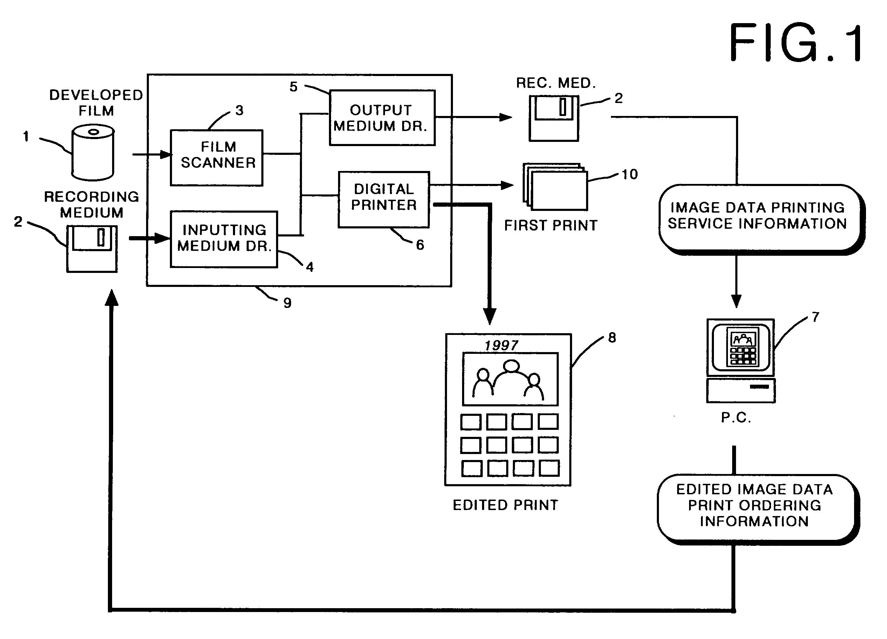

Hereinafter, a picture print ordering method and system of the present invention will be explained referring to the accompanying drawings. Figure 1 shows an outline of the picture printing system of the present invention. Data exchange between a laboratory system 9 which is installed in a laboratory and a personal computer 7 belonging to a customer is explained in Figure 1.

A picture image recorded on a developed film 1 is read by a film scanner 3 in the laboratory system 9, and digitized thereby. The digital image data thus obtained are output as a first print 10 by a digital printer 6 according to the customer's request, while recorded in a recording medium 2 such as an MO disc or a Zip disc by an outputting drive 5. Although such a digital output service has already been known, the present invention is characterized by the fact that printing service information is output in the recording medium 2 together with the picture image data when the digital output service is carried out.

The printing service information means information showing the printing services which can be provided by the service provider which has carried out the digital output service. The information is equivalent to the information presented by posters and leaflets at service providers of a conventional system, for example. More specifically, the printing service information includes the kind of printing services (for example, extra print generation, postcard generation, calendar generation, or the like), the sizes which can be available upon printing, and the service charge for each service. Furthermore, it is preferable that the printing service information includes illustration image data which can be combined for a print (for example, illustrations of animals representing the twelve signs of the Chinese zodiac, for generating a new year greeting postcard) or the like. The printing service information is recorded in the recording medium 2 as data in a predetermined data format.

Moreover, to enable a user to specify a preferred finish, the information regarding the finish of a print may be included in the printing service information. For example, sunset finish for making a print of a sunset look like a beautiful sunset, snow finish for expressing a snow scene, perspective finish processing for emphasizing distance, painting finish for making a print look magnificent like an oil painting, sharp finish for emphasizing sharpness in the finish, scenery finish for emphasizing scenery, portrait finish for expressing a beautiful complexion, soft finish for expressing softness in the finish, high key finish for making a print appear to be in a high key, low key finish for making a print appear to be in a low key, reversal finish for making colors spread well, monochrome finish for finishing a print in monochrome, sepia finish for finishing a print in sepia color, gloss finish for expressing gloss or luminosity, and red correction finish for correcting red colors, are included as the information regarding the finish.

On the contrary, some users do not wish a service provider to carry out any correction processing. Therefore, it is preferable that no correction, that is, no processing to be carried out, is also included as the information regarding the finish.

Furthermore, some users wish a detail specification to be left to the discretion of a service provider. For example, in a trimming service, a customer sometimes requests that an area including this figure is trimmed. The printing service information can include such a service therein. In such a case, it is preferable that not only a service wherein a user can specify the area to be trimmed but also a service wherein detail specification regarding the trimming is left to the service provider's discretion are included as one of the choices that a customer can make.

The content of the services to be provided and the service charges generally vary, depending on service providers. Since the printing service information is, as described above, generated and recorded at each service provider, the content of the printing service information reflects each service provider's circumstances. For example, when a calendar is generated, it requires equipment which can generate a large size print such as A3 or B4, and the service charge is usually different at each service provider. Furthermore, the time necessary for providing a service generally varies. Moreover, if the service charges are reviewed periodically, or if a time-limited service such as new year greeting postcard generation is provided, it is preferable that information regarding the term of validity of the service is included in the printing service information. The name of the service provider or the name of the laboratory system 9 may also be included in the printing service information.

Meanwhile, viewer software for browsing picture images, editing and processing software for editing or processing the picture images, and order generating software for generating an order are installed in the personal computer 7 of a customer. Such kinds of application software may be provided to a customer by recording the software in the recording medium 2 together with image data, or sold separately on the market using another medium, or provided as free software.

By using such software, a customer can generate edited image data by referring to picture image data recorded in the recording medium 2 on a display screen of a personal computer and composing a plurality of images in a preferred layout to make one image, or by combining picture image data with an illustration or a character string. By using the order screen, the customer then generates print ordering information regarding the edited image data or the raw image data provided by a service provider.

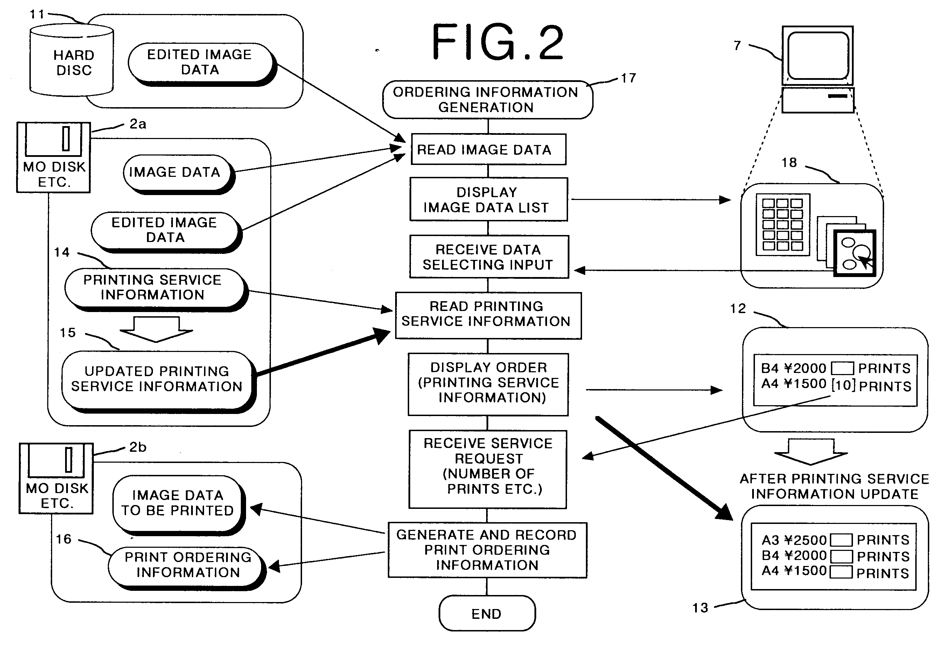

Figure 2 explains print ordering information generation processing 17 of this system. This processing is carried out by order generating software installed in the personal computer. This software reads image data provided by a service provider after being recorded in a recording medium 2a, or edited image data recorded in the recording medium 2a or in a hard disc of the personal computer after a customer has carried out editing processing on the image data provided by the service provider, and displays the image data on a display screen 18. Alternatively, only the file names of the image data may be displayed so that only necessary image data are displayed on the screen according to an instruction by the customer.

After the image data to be output as a print are selected by a customer using a keyboard or a mouse or the like, the software then reads printing service information 14 recorded in the recording medium 2a and displays the information on an order screen 12. On this occasion, the printing service information 14 is provided independently from the order generating software. Therefore, for example, if the printing service information 14 is updated and changed into printing service information 15, the order screen 12 also changed into an order screen 13. In this manner, when the order screen 12 is displayed, for example, a customer cannot generate print ordering information 16 for requesting print output in A3 size. Therefore, a customer can generate print ordering information considering the service charges or the content of the services that a service provider can provide.

Information that a customer has provided on the order screen, such as the number of prints, is accepted by the software as a request for a service, and print ordering information 16 in a predetermined data format is automatically generated to be recorded in a recording medium 2b which will be handed to the service provider. As the recording medium 2b, the recording medium 2a or another recording medium may be used.

The format of the print ordering information 16 is in accordance with the IS standard proposed by Fuji Photo Film Co. Ltd. The IS standard defines the format of an order file for conveying the print ordering information (for example, the number or the size of prints or the like) from a customer to a laboratory. The IS standard also defines the disc configuration (the format, the directory structure, and the like), the tone and data format necessary for maintaining the picture quality, the structure and the content of recording and the format of the image file, or the like. Fuji Photo Film provides conversion software for the IS standard which is used to convert the print ordering information and image data in the format of BMP, JPEG, TIFF, photo CD or the like into a file according to the IS standard. Therefore, a customer only has to record the file generated by using this software in the recording medium 2b and provide it to the service provider. The laboratory system 9 then reads the print ordering information 16 from the recording medium 2b and can generate an ordered picture print (for example editing manipulated print 8 in Figure 1) automatically.

The format of the print ordering information 16 may be in accordance with a standard other than the IS standard, as long as the format can be dealt with by the pre-defined photo finishing system.

When the image data brought in by a customer are high resolution image data, the data may be printed as they are. However, if the image data are low resolution image data recorded in a floppy disc or the like, the developed film 1 is separately provided by the customer and the picture image corresponding to the image data specified by the print ordering information are read by the film scanner 3 so that high resolution image data are obtained and output as a print.

The printing service information generated for the first time may be recorded in a recording medium together with image data and can be downloaded thereafter via a network, for example. In this manner, when a service is not effective at the time of print ordering information generation, or the latest data are wanted, such as the case where an illustration of the animals representing each of the twelve signs of the Chinese zodiac is used to generate a new year greeting postcard which should be changed every year is required, only the printing service information can be updated.

The printing service information may not necessarily rigidly mean the information showing the services that a service provider can provide. In other words, when a service provider acts as an agency but the actual print output is ordered from another laboratory, the printing service information including the services which can be provided by the laboratory may be provided to a customer as the printing service information of the service provider.

In the above system, it is possible that a customer will ask for a service without noticing that the validity time has expired, or ask for a service at a service provider which is different from the service provider which has previously provided the printing service information to the customer. To avoid this kind of problem, the printing service information 14 includes identification information comprising the service provider's name, the type of laboratory system, and the date of printing service information update, for example. When the print ordering information is generated, the identification information is included in the print ordering information 16 and the laboratory system 9 refers to it. Such identification information may not necessarily be recorded as electronic data in a recording medium, and may be written on a label of an MO disc, for example.

## Claims

1. A picture print ordering method which orders a print of a picture image by generating print ordering information comprising electronic data in a predetermined standard to be processed by a predetermined photo finishing system, comprising the steps of:
recording picture image data obtained by reading a developed film and printing service information regarding the printing service which can be provided for the image data in a predetermined recording medium;
displaying the printing service information and the image data recorded in the recording medium when the print ordering information for requesting a printing service regarding the image data recorded in the recording medium is generated; and
generating the print ordering information by using the displayed printing service information.

2. A picture print ordering method as defined in Claim 1 wherein the printing service information includes the sizes in which a print can be generated and the service charges therefor.

3. A picture print ordering method as defined in Claim 1 or 2 wherein the printing service information includes information regarding the terms of validity of the printing services.

4. A picture print ordering method as defined in any one of Claims 1 to 3 wherein the printing service information includes information showing an apparatus and/or a service provider by which the printing service information has been recorded in the recording medium.

5. A picture print ordering method as defined in any one of Claims 1 to 4 wherein the printing service information includes information showing the kinds of finishing processing which can be carried out on the picture image when the picture image is printed.

6. A picture print ordering system which orders a print of a picture image by generating print ordering information comprising electronic data in a predetermined standard to be processed by a predetermined photo finishing system, comprising;
printing service information recording means which records picture image data obtained by reading a developed film and printing service information regarding the printing services which can be provided to the image data in a predetermined recording medium;
display means which displays the printing service information recorded in the recording medium and the image data when the print ordering information for requesting a printing service regarding the image data recorded in the recording medium is generated;
input receiving means which receives input of a variety of instruction information using the displayed printing service information; and
print ordering information generating means which generates the print ordering information by using the displayed printing service information received by the input receiving means.

7. A picture print ordering system as defined in Claim 6 wherein the printing service information includes the sizes in which a print can be generated and the service charges therefor.

8. A picture print ordering system as defined in Claim 1 or 2 wherein the printing service information includes information regarding the terms of validity of the printing services.

9. A picture print ordering system as defined in any one of Claims 6 to 8 wherein the printing service information includes information showing an apparatus and/or a service provider by which the printing service information has been recorded in the recording medium.

10. A picture print ordering system as defined in any one of Claims 6 to 9 wherein the printing service information includes information showing the kinds of finishing processing which can be carried out on the picture image when the picture image is printed.

11. A photo finishing system comprising image data obtaining means which obtains picture image data, print ordering information obtaining means which obtains print ordering information regarding the image data, and print generating means which carries out a variety of printing processing based on the print ordering information, wherein
the print ordering information obtaining means obtains print ordering information having been generated by using printing service information and the image data displayed on a predetermined order screen as print services which can be provided for the image data, and
the print generating means carries out a variety of printing processing for providing the printing service displayed as the printing service information, based on the print ordering information.

12. A recording medium wherein a program is stored by means of which a computer generates print ordering information in order to order a print of a picture image, said print ordering information comprising electronic data in a predetermined standard to be processed by a predetermined photo finishing system, the program comprising the steps of:
displaying printing service information and image data of the picture image recorded in a predetermined recording medium on a display apparatus connected to the computer;
enabling instruction information using the displayed printing service information to be input by a variety of input devices of the computer; and
generating the print ordering information based on the instruction information input by the variety of input devices.
